# EUROPEAN PATENT APPLICATION

(11) **EP 4 835 974 A1**
(43) Date of publication of application: **04.11.2026**
(21) Application number: 24912764.8
(22) Date of filing: 23.12.2024
(51) Int. Cl.: H01M 4/13, H01M 4/62

(54) **ELECTRODE AND BATTERY**

(30) Priority: 27.12.2023 JP 2023221949
(71) Applicant: Panasonic Intellectual Property Management Co., Ltd., Kadoma-shi, Osaka 571-0057 (JP)
(72) Inventor: WATANABE, Takashi, kadoma-shi, Osaka 571-0057 (JP); SAKATA, Motohiro, kadoma-shi, Osaka 571-0057 (JP)
(74) Representative: Novagraaf International SA
(86) International application number: PCT/JP2024/045562
(87) International publication number: WO 2025/142877

(57) **Abstract**

An electrode mixture layer (12) of an electrode (10) according to the present disclosure includes an electrode active material, a rubber-based binder, and a water-soluble binder. When four divided layers obtained by dividing the electrode mixture layer (12) into four equal parts in a thickness direction are defined, in order from a surface side of the electrode mixture layer (12) toward the electrode current collector (11), as a first divided layer (12a), a second divided layer (12b), a third divided layer (12c), and a fourth divided layer (12d); mass percentages (%) of the rubber-based binder in the first divided layer, the second divided layer, the third divided layer, and the fourth divided layer relative to a total mass of the rubber-based binder in the electrode mixture layer (12) are respectively defined as A1, B1, C1, and D1; and mass percentages (%) of the water-soluble binder in the first divided layer, the second divided layer, the third divided layer, and the fourth divided layer relative to a total mass of the water-soluble binder in the electrode mixture layer (12) are respectively defined as A2, B2, C2, and D2, the electrode mixture layer (12) satisfies the following relational expressions (1), (2), and (3): $A 1 + D 1 < B 1 + C 1$ (1); $A 2 + D 2 < B 2 + C 2$ (2); and $A 1 < A 2$ (3).

## Description

### TECHNICAL FIELD

The present disclosure relates to an electrode and a battery.

### BACKGROUND ART

In recent years, secondary batteries such as lithium-ion batteries have been widely used for applications requiring high capacity such as in-vehicle applications and power storage applications. Electrodes incorporated into such batteries significantly affect battery performance. Accordingly, various studies on electrodes have conventionally been conducted.

An electrode is usually composed of a current collector and an electrode mixture layer including an electrode active material and a binder. For example, Patent Literature 1 discloses a technique, in an electrode including an electrode mixture layer composed of a plurality of layers, for enhancing adhesion between the layers while suppressing the amount of binder. Specifically, Patent Literature 1 discloses a technique, in a secondary battery laminate including a first active material layer and a second active material layer that function as the above electrode mixture layer, and a current collector, for causing a binder to be present in a larger amount in a specific region in order to enhance adhesion between the active material layers and between the current collector and the active material layers.

### CITATION LIST

### Patent Literature

Patent Literature 1: JP 2020-161299 A

### SUMMARY OF INVENTION

### Technical Problem

According to the technique disclosed in Patent Literature 1, when an electrode mixture layer is composed of a plurality of layers, adhesion between the layers can be enhanced to avoid a delamination issue. However, there have been demands on electrodes to not only avoid such a delamination issue but also enhance battery characteristics.

The present disclosure provides an electrode capable of reducing the internal resistance of a battery.

### Solution to Problem

An electrode of the present disclosure includes:
an electrode current collector; and
an electrode mixture layer disposed on the electrode current collector, wherein
the electrode mixture layer includes an electrode active material and a binder,
the binder includes a rubber-based binder and a water-soluble binder, and
when four divided layers obtained by dividing the electrode mixture layer into four equal parts in a thickness direction are defined, in order from a surface side of the electrode mixture layer toward the electrode current collector, as a first divided layer, a second divided layer, a third divided layer, and a fourth divided layer;
relative to a total mass of the rubber-based binder in the electrode mixture layer, a mass percentage (%) of the rubber-based binder in the first divided layer is defined as A1, a mass percentage (%) of the rubber-based binder in the second divided layer is defined as B1, a mass percentage (%) of the rubber-based binder in the third divided layer is defined as C1, and a mass percentage (%) of the rubber-based binder in the fourth divided layer is defined as D1; and
relative to a total mass of the water-soluble binder in the electrode mixture layer, a mass percentage (%) of the water-soluble binder in the first divided layer is defined as A2, a mass percentage (%) of the water-soluble binder in the second divided layer is defined as B2, a mass percentage (%) of the water-soluble binder in the third divided layer is defined as C2, and a mass percentage (%) of the water-soluble binder in the fourth divided layer is defined as D2,
the electrode mixture layer satisfies the following relational expressions (1), (2), and (3): $A 1 + D 1 < B 1 + C 1$ (1); $A 2 + D 2 < B 2 + C 2$ (2); and $A 1 < A 2$ (3).

### Advantageous Effects of Invention

According to the technique of the present disclosure, an electrode capable of reducing the internal resistance of a battery can be provided.

### BRIEF DESCRIPTION OF DRAWINGS

FIG. 1 is a cross-sectional view schematically showing the configuration of an electrode according to Embodiment 1.
FIG. 2 is a longitudinal sectional view schematically showing an example of a battery according to Embodiment 2.

### DESCRIPTION OF EMBODIMENTS

### [Findings Underlying the Present Disclosure]

The present inventors have conducted intensive studies and found that, to enhance battery characteristics, specifically to achieve a reduction in internal resistance, it is necessary to appropriately control the binder distribution in an electrode taking the type of binder into consideration as well. As a result, the present inventors have arrived at the electrode of the present disclosure described below.

Embodiments of the present disclosure are described in detail below with reference to the drawings. The present disclosure is not limited to the following embodiments.

### [Embodiments of the Present Disclosure]

### (Embodiment 1)

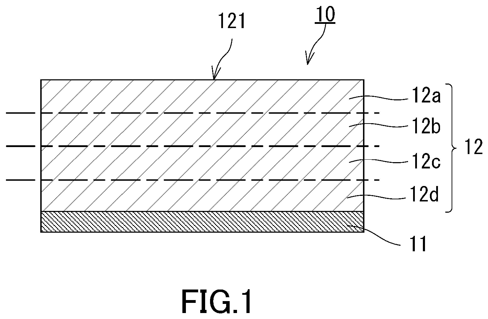

FIG. 1 is a cross-sectional view schematically showing the configuration of an electrode according to Embodiment 1. An electrode 10 according to Embodiment 1 includes an electrode current collector 11 and an electrode mixture layer 12 disposed on the electrode current collector 11. The electrode mixture layer 12 includes an electrode active material and a binder. The binder includes a rubber-based binder and a water-soluble binder. That is, the electrode mixture layer 12 includes both a rubber-based binder and a water-soluble binder.

Here, four divided layers obtained by dividing the electrode mixture layer 12 into four equal parts in the thickness direction are defined, in order from a surface 121 side of the electrode mixture layer 12 toward the electrode current collector 11, as a first divided layer 12a, a second divided layer 12b, a third divided layer 12c, and a fourth divided layer 12d. Further, relative to the total mass of the rubber-based binder in the electrode mixture layer 12, the mass percentage (%) of the rubber-based binder in the first divided layer 12a is defined as A1, the mass percentage (%) of the rubber-based binder in the second divided layer 12b is defined as B1, the mass percentage (%) of the rubber-based binder in the third divided layer 12c is defined as C1, and the mass percentage (%) of the rubber-based binder in the fourth divided layer 12d is defined as D1. Further, relative to the total mass of the water-soluble binder in the electrode mixture layer 12, the mass percentage (%) of the water-soluble binder in the first divided layer 12a is defined as A2, the mass percentage (%) of the water-soluble binder in the second divided layer 12b is defined as B2, the mass percentage (%) of the water-soluble binder in the third divided layer 12c is defined as C2, and the mass percentage (%) of the water-soluble binder in the fourth divided layer 12d is defined as D2. In this case, the electrode mixture layer 12 satisfies the following relational expressions (1), (2), and (3): $A 1 + D 1 < B 1 + C 1$ (1); $A 2 + D 2 < B 2 + C 2$ (2); and $A 1 < A 2$ (3).

In the present disclosure, the surface 121 of the electrode mixture layer 12 means a surface that comes into contact with the electrolyte in a battery in which the electrode 10 is incorporated, and the surface 121 is located opposite to the surface facing the electrode current collector 11.

The first divided layer 12a, the second divided layer 12b, the third divided layer 12c, and the fourth divided layer 12d are virtual layers obtained on the assumption that the electrode mixture layer 12 is divided into four equal parts in the thickness direction. Accordingly, the electrode mixture layer 12 is not limited to a structure composed of a plurality of layers. The electrode mixture layer 12 may be composed of a single layer or a plurality of layers. Further, when the electrode mixture layer 12 is composed of a plurality of layers, the number of layers is not particularly limited. The electrode mixture layer 12 may have a two-layer structure, a three-layer structure, a four-layer structure, or a structure having five or more layers.

By controlling the distribution of the rubber-based binder and the water-soluble binder in the electrode mixture layer 12 so that the electrode mixture layer 12 satisfies the above relational expressions (1), (2), and (3), the electrode 10 according to Embodiment 1 can reduce the internal resistance of the battery, specifically the direct current internal resistance (DCR).

By satisfying the above relational expressions (1) and (2), both the rubber-based binder and the water-soluble binder are present at higher mass percentages in an intermediate region of the electrode mixture layer 12 in the thickness direction. That is, in the electrode mixture layer 12, the rubber-based binder and the water-soluble binder are present at lower mass percentages in a region including the surface 121 and a region closer to the electrode current collector 11 than in the intermediate region. By distributing both the rubber-based binder and the water-soluble binder in this manner, it is considered possible, for example, to effectively reduce the resistance at the contact interface between the electrode mixture layer 12 and the electrode current collector 11, and the resistance at the contact interface between the electrode 10 and the electrolyte in a battery in which the electrode 10 is incorporated. Further, by satisfying the above relational expression (3), in the region including the surface 121 of the electrode mixture layer 12, the mass percentage A2 of the water-soluble binder, which generally has low resistance, becomes higher than the mass percentage A1 of the rubber-based binder, which generally has high resistance. By controlling the distribution of the rubber-based binder and the water-soluble binder in the region including the surface 121 of the electrode mixture layer 12 in this manner, it is considered possible to effectively reduce the resistance at the contact interface between the electrode 10 and the electrolyte in a battery in which the electrode 10 is incorporated. For these reasons, it is considered that the electrode 10 including the electrode mixture layer 12 satisfying the above relational expressions (1), (2), and (3) can reduce the internal resistance of the battery.

The electrode 10 including the electrode mixture layer 12 satisfying the above relational expression (3) can also enhance the cycle characteristics of the battery.

Further, similarly to the electrode disclosed in Patent Literature 1, the electrode 10 according to Embodiment 1, in which the electrode mixture layer 12 satisfies both the above relational expressions (1) and (2), can achieve excellent adhesion in the electrode mixture layer 12 and excellent adhesion between the electrode mixture layer 12 and the current collector 11.

In the present specification, the term "rubber-based binder" means a binder that includes a rubber-based polymer compound. The rubber-based polymer compound need only be a polymer compound having rubber elasticity, and is not particularly limited. Examples of rubber-based polymer compounds include styrene-butadiene rubber, high-styrene rubber, ethylene-propylene rubber, butyl rubber, chloroprene rubber, butadiene rubber, isoprene rubber, acrylonitrile-butadiene rubber, acrylonitrile rubber, fluororubber, acrylic rubber, and silicone rubber. The rubber-based binder may be, for example, at least one selected from the group consisting of styrene-butadiene rubber, high-styrene rubber, ethylene-propylene rubber, butyl rubber, chloroprene rubber, butadiene rubber, isoprene rubber, acrylonitrile-butadiene rubber, acrylonitrile rubber, fluororubber, acrylic rubber, and silicone rubber.

Further, in the present specification, the term "water-soluble binder" means a binder that includes a water-soluble polymer compound. The water-soluble polymer compound is not particularly limited, and examples thereof include a synthetic polymerbased water-soluble polymer compound (hereinafter referred to as "synthetic polymer compound"), and a polysaccharide-based water-soluble polymer compound (hereinafter referred to as "polysaccharide-based polymer compound"). The water-soluble binder may include one compound alone or a mixture of two or more compounds selected from synthetic polymer compounds and polysaccharide-based polymer compounds. Examples of synthetic polymer compounds include polyvinyl alcohol, polyvinylpyrrolidone, polyethylene oxide, polymethacrylic acid, polyacrylic acid, and derivatives thereof. Examples of polysaccharide-based polymer compounds include cellulose or a salt thereof, and carboxymethylcellulose or a salt thereof (e.g., CMC-Na). The water-soluble binder may include, for example, at least one selected from the group consisting of polyvinyl alcohol, polyvinylpyrrolidone, polyethylene oxide, derivatives of polyvinyl alcohol, derivatives of polyvinylpyrrolidone, derivatives of polyethylene oxide, polymethacrylic acid (MAA), salts of polymethacrylic acid (e.g., MAA-Na or MAA-K, including partially neutralized salts), polyacrylic acid (PAA), salts of polyacrylic acid (e.g., PAA-Na or PAA-K, including partially neutralized salts), cellulose, salts of cellulose, carboxymethylcellulose, and salts of carboxymethylcellulose.

The mass percentages of the rubber-based binder in the first divided layer 12a, the second divided layer 12b, the third divided layer 12c, and the fourth divided layer 12d can be determined by elemental mapping of a cross section along the thickness direction of the electrode mixture layer 12. Quantitative analysis of the rubber-based binder by elemental mapping can be performed using an electron probe microanalyzer (EPMA). When the rubber-based binder contained in the electrode mixture layer 12 and to be measured is, for example, a rubber-based polymer compound having a C=C bond, bromine, for example, is added to the C=C bond, and bromine is analyzed by EPMA elemental mapping of a cross section of the electrode mixture layer 12. Thus, the content of the rubber-based binder in each of the above divided layers can be determined. Since bromine selectively undergoes an addition reaction with a C=C bond, bromine is suitable as an element for staining the rubber-based polymer compound having a C=C bond in the electrode mixture layer 12. The method for adding bromine to the rubber-based polymer compound is not particularly limited, and may be a gas-phase reaction in a bromine atmosphere or a method of immersing the electrode 10 in a bromine solution. When the rubber-based binder contained in the electrode mixture layer 12 and to be measured is a rubber-based polymer compound not having a C=C bond, the content of the rubber-based binder may be measured by EPMA elemental mapping of an osmium tetroxide-stained cross section along the thickness direction of the electrode mixture layer 12.

The EPMA conditions are set, for example, as follows.
Electron beam diameter: about 1 µm
Accelerating voltage: about 15 kV
Beam current: about 50 nA
Number of pixels: about 255 × 255 pixels
Measurement time: about 30 msec/pixel

The mass percentages of the water-soluble binder in the first divided layer 12a, the second divided layer 12b, the third divided layer 12c, and the fourth divided layer 12d can be determined by elemental mapping of a cross section along the thickness direction of the electrode mixture layer 12. Quantitative analysis of the water-soluble binder by elemental mapping can be performed using EPMA. When the water-soluble binder contained in the electrode mixture layer 12 and to be measured is, for example, a water-soluble polymer compound having a carboxyl group, the content of the water-soluble binder in each of the above divided layers can be determined by modifying the carboxyl group with, for example, ruthenium and analyzing ruthenium by EPMA elemental mapping. Even when the water-soluble binder contained in the electrode mixture layer 12 and to be measured is a water-soluble polymer compound free of a carboxyl group, the content of the water-soluble binder can be measured by modifying the water-soluble polymer compound with a metal element capable of modifying a characteristic functional group constituting the water-soluble polymer compound, and analyzing the element used for the modification by elemental mapping.

The electrode mixture layer 12 may satisfy the following relational expressions (4) and (5): $A 1 < B 1$ (4); and $A 2 < B 2$ (5).

When the electrode mixture layer 12 satisfies the above relational expressions (4) and (5), that is, when the mass percentage A1 of the rubber-based binder in the first divided layer 12a is lower than the mass percentage B1 of the rubber-based binder in the second divided layer 12b, and the mass percentage A2 of the water-soluble binder in the first divided layer 12a is lower than the mass percentage B2 of the water-soluble binder in the second divided layer 12b, the electrode 10 according to Embodiment 1 can further reduce the internal resistance of the battery.

The electrode mixture layer 12 may satisfy the following relational expression (6): $B 2 + C 2 < B 1 + C 1$ (6).

When the electrode mixture layer 12 satisfies the above relational expression (6), that is, when, in the intermediate region of the electrode mixture layer 12 in the thickness direction composed of the second divided layer 12b and the third divided layer 12c, the mass percentage of the rubber-based binder (i.e., B1 + C1) is higher than the mass percentage of the water-soluble binder (i.e., B2 + C2), the electrode 10 according to Embodiment 1 can further reduce the internal resistance of the battery.

The electrode mixture layer 12 may satisfy the following relational expression (7): $57 % < B 1 + C 1 < 65 %$ (7).

When the electrode mixture layer 12 satisfies the above relational expression (7), that is, when, in the intermediate region of the electrode mixture layer 12 in the thickness direction composed of the second divided layer 12b and the third divided layer 12c, the mass percentage of the rubber-based binder (i.e., B1 + C1) is greater than 57% and less than 65%, the electrode 10 according to Embodiment 1 can further reduce the internal resistance of the battery. B1 + C1 may be 58% or more, or 59% or more. Further, B1 + C1 may be 64% or less, or 63% or less.

The electrode mixture layer 12 may satisfy the following relational expression (8): $55 % < B 2 + C 2 < 60 %$ (8).

When the electrode mixture layer 12 satisfies the above relational expression (8), that is, when, in the intermediate region of the electrode mixture layer 12 in the thickness direction composed of the second divided layer 12b and the third divided layer 12c, the mass percentage of the water-soluble binder (i.e., B2 + C2) is greater than 55% and less than 60%, the electrode 10 according to Embodiment 1 can further reduce the internal resistance of the battery. B2 + C2 may be 56% or more. Further, B2 + C2 may be 59% or less, or 58% or less.

The content of the rubber-based binder in the electrode mixture layer 12 is, for example, 0.5 mass% or more and 2.0 mass% or less.

The content of the water-soluble binder in the electrode mixture layer 12 is, for example, 1.0 mass% or more and 3.0 mass% or less.

The percentage of the rubber-based binder in the binder contained in the electrode mixture layer 12 is, for example, 14.0 mass% or more and 66.0 mass% or less.

The percentage of the water-soluble binder in the binder contained in the electrode mixture layer 12 is, for example, 33.0 mass% or more and 86.0 mass% or less.

The mass ratio between the rubber-based binder and the water-soluble binder contained in the electrode mixture layer 12 is not particularly limited; for example, the percentage of the rubber-based binder is smaller than that of the water-soluble binder.

When the tortuosity of the first divided layer 12a in the thickness direction is defined as τA and the tortuosity of the fourth divided layer 12d in the thickness direction is defined as τD, the electrode mixture layer 12 may satisfy the following relational expression (9): $τA < τD$ (9).

The tortuosity of the electrode mixture layer is an index indicating the degree of tortuousness of voids (pores) formed in the electrode mixture layer and through which the electrolyte solution passes. A smaller tortuosity means that the path through the voids is less tortuous. The tortuosity of the electrode mixture layer is a value obtained by dividing the distance (path length) from the starting point to the ending point of a void in the electrode mixture layer by the straight-line distance from the starting point to the ending point of the void in the electrode mixture layer. When the path length is equal to the straight-line distance from the starting point to the ending point of the void in the electrode mixture layer, the tortuosity is 1.

The tortuosity τA of the first divided layer 12a is a value obtained by dividing the distance (path length) from the starting point to the ending point of a void in the first divided layer 12a by the straight-line distance from the starting point to the ending point of the void in the first divided layer 12a. The tortuosity τD of the fourth divided layer 12d is a value obtained by dividing the distance (path length) from the starting point to the ending point of a void in the fourth divided layer 12d by the straight-line distance from the starting point to the ending point of the void in the fourth divided layer 12d. When the electrode mixture layer 12 satisfies the above relational expression (9), the tortuosity τD of the fourth divided layer 12d located closer to the electrode current collector 11 can be further increased to increase the packing density of the electrode active material particles, and the tortuosity τA of the first divided layer 12a located closer to the surface can be further decreased to enhance the rate characteristics of the battery. Accordingly, the electrode 10 according to Embodiment 1 can achieve a battery having enhanced cycle characteristics during high-rate charging and discharging.

The electrode mixture layer 12 may satisfy the following relational expression (10): $0.3 \leq τA / τD < 1$ (10).

When the electrode mixture layer 12 satisfies the above relational expression (10), that is, when the ratio (τA/τD) of the tortuosity τA of the first divided layer 12a to the tortuosity τD of the fourth divided layer 12d is 0.3 or more and less than 1, a battery having further enhanced cycle characteristics during high-rate charging and discharging can be achieved. The ratio of the tortuosity τA of the first divided layer 12a to the tortuosity τD of the fourth divided layer 12d is hereinafter referred to as the tortuosity ratio TA/TD.

The electrode mixture layer 12 may satisfy the following relational expression (11): $0.4 \leq τA / τD < 0.8$ (11).

When the electrode mixture layer 12 satisfies the above relational expression (11), that is, when the tortuosity ratio τA/τD is 0.4 or more and less than 0.8, a battery having further enhanced cycle characteristics during high-rate charging and discharging can be achieved.

The tortuosity τA of the first divided layer 12a is, for example, 1.2 or more and 4.5 or less, and may be 1.5 or more and 3.0 or less.

The tortuosity τD of the fourth divided layer 12d is, for example, 1.5 or more and 5.0 or less, and may be 2.0 or more and 4.0 or less.

In the present specification, the tortuosity τA of the first divided layer 12a and the tortuosity τD of the fourth divided layer 12d are respectively calculated by the following equations (I) and (II). In equation (I), fA is the length of a path in the first divided layer 12a along which the medial axis extends from one face to the other face opposed thereto in the thickness direction (abbreviated as "path length"), and sA is the length of a straight line connecting the starting point and the ending point of the path fA (abbreviated as "straight-line distance between the starting and ending points"). In equation (II), fD is the length of a path in the fourth divided layer 12d along which the medial axis extends from one face to the other face opposed thereto in the thickness direction (abbreviated as "path length"), and sD is the length of a straight line connecting the starting point and the ending point of the path fD (abbreviated as "straight-line distance between the starting and ending points"). Further, a sample for evaluating the tortuosity is evaluated in a fully discharged state. $τA = fA / sA$ (I) $τD = fD / sD$ (II)

The above path lengths and straight-line distances can be determined by cross-sectional observation and image analysis of the electrode mixture layer 12 using a 3D scanning electron microscope (3D SEM, e.g., Ethos NX-5000, manufactured by Hitachi High-Tech Corporation).

A specific method of calculating the tortuosity is as follows.

### (1) Construction of Three-Dimensional Structure

The electrode mixture layer 12, for which a three-dimensional structure is to be constructed using a 3D SEM, is placed on the sample stage of the 3D SEM, and serial sectioning and cross-sectional observation are alternately performed. The observation is performed at an accelerating voltage of 5 kV. The sequential two-dimensional images thus obtained are binarized using three-dimensional image analysis software (e.g., EX FACT VR, manufactured by Nihon Visual Science, Inc.), and the binarized images are joined together to construct a three-dimensional structure. The three-dimensional structure preferably has dimensions of 100 µm × 100 µm × 100 µm or more.

### (2) Identification of First Divided Layer 12a and Fourth Divided Layer 12d

In the image of the three-dimensional structure obtained according to (1) above, among the regions obtained by dividing the three-dimensional structure into four equal parts in the thickness direction, the region located closest to the surface is identified as the first divided layer 12a, and the region located closest to the electrode current collector 11 is identified as the fourth divided layer 12d.

### (3) Determination of fA, fD, sA, and sD in First Divided Layer 12a and Fourth Divided Layer 12d

In the image of the three-dimensional structure obtained according to (1) above, the first divided layer 12a and the fourth divided layer 12d are identified according to (2) above, and further, voids extracted by binarization are thinned to determine axes passing through the centers of the voids (medial axes). Among the medial axes present in the cube, those extending through the cube in a direction perpendicular to the surface of the electrode current collector 11 are extracted, and, for a path with branches, the respective shortest paths are determined as the path lengths (fA and fD) in the first divided layer 12a and the fourth divided layer 12d.

### (4) Calculation of Tortuosities of First Divided Layer 12a and Fourth Divided Layer 12d

The tortuosities of the first divided layer 12a and the fourth divided layer 12d are respectively calculated by the above equations (I) and (II), using the average values of the path lengths (fA and fD) in the first divided layer 12a and the second divided layer 12d obtained according to (3) above and the average values of the straight-line distances (sA and sD) connecting the starting and ending points of the paths.

The electrode 10 of Embodiment 1 may be a negative electrode or a positive electrode. The electrode 10 of Embodiment 1 is, for example, a negative electrode. Both the negative electrode and the positive electrode may have the configuration of the electrode 10 described above.

The electrode 10 of Embodiment 1 can be produced, for example, by applying an electrode mixture slurry, prepared by dispersing an electrode mixture including an electrode active material and a binder in a dispersion medium, to the surface of an electrode current collector, and drying the coating film to form the electrode mixture layer 12. The dried coating film may be rolled as necessary. The electrode mixture layer 12 may be formed on one surface or both surfaces of the electrode current collector 11.

In forming the electrode mixture layer 12, the number of times the electrode mixture slurry is applied is not particularly limited. For example, the electrode mixture layer 12 may be formed by a single application of the electrode mixture slurry. In this case, by appropriately adjusting the drying conditions of the coating film, the electrode mixture layer 12 can be produced in which the arrangement of the rubber-based binder and the water-soluble binder is controlled so as to satisfy the above relational expressions (1), (2), and (3). Further, by appropriately adjusting the drying conditions of the coating film, the electrode mixture layer 12 can be produced in which the arrangement of the rubber-based binder and the water-soluble binder is controlled so as to further satisfy one or more of the above relational expressions (4) to (8).

The electrode mixture layer 12 may be formed by multiple applications of the electrode mixture slurry. In this case, for example, the application may be performed using a plurality of electrode mixture slurries having compositions different from each other. Thus, when a plurality of electrode mixture slurries having compositions different from each other are used, the electrode mixture layer 12 can be produced, for example, by preparing a plurality of electrode mixture slurries in each of which at least one selected from the group consisting of the ratio between the rubber-based binder and the water-soluble binder and the blending ratio between the materials constituting the electrode active material (e.g., the blending ratio between artificial graphite and natural graphite) is appropriately adjusted, and selecting an appropriate electrode mixture slurry for each of a region closer to the electrode current collector, an intermediate region, and a surface region. Thus, the electrode mixture layer 12 can be more easily produced in which the arrangement of the rubber-based binder and the water-soluble binder is controlled so as to satisfy the above relational expressions (1), (2), and (3). The above artificial graphite and natural graphite are examples of carbon materials, which are examples of the electrode active material. Further, by selecting such appropriate electrode mixture slurries, the electrode mixture layer 12 can also be produced in which the arrangement of the rubber-based binder and the water-soluble binder is controlled so as to further satisfy one or more of the above relational expressions (4) to (8).

To produce the electrode mixture layer 12 such that the tortuosity τA of the first divided layer 12a and the tortuosity τD of the fourth divided layer 12d satisfy the above relational expression (9), for example, a plurality of electrode active materials may be used. For example, as the electrode active material, an active material A and an active material B that are materials different from each other are prepared, and a plurality of electrode mixture slurries each having a different blending ratio between the active material A and the active material B are prepared. For example, by changing the blending ratio between the active material A and the active material B between an electrode mixture slurry for producing a region corresponding to the first divided layer 12a and an electrode mixture slurry for producing a region corresponding to the fourth divided layer 12d, it is possible to perform control so that the tortuosity τA of the first divided layer 12a and the tortuosity τD of the fourth divided layer 12d satisfy the above relational expression (9).

The components of the electrode 10 of Embodiment 1 are described in detail below.

### [Electrode Current Collector]

When the electrode 10 is a negative electrode, the electrode current collector 11 is a negative electrode current collector. As the negative electrode current collector, a sheet or film formed of a metal material such as stainless steel, nickel, copper, or an alloy thereof can be used. The sheet or film may be porous or non-porous. As the sheet or film, a metal foil, a metal mesh, or the like is used. A carbon material, such as carbon, may be applied as a conductive auxiliary material to the surface of the negative electrode current collector.

When the electrode 10 is a positive electrode, the electrode current collector 11 is a positive electrode current collector. As the positive electrode current collector, a sheet or film formed of a metal material such as aluminum, stainless steel, titanium, or an alloy thereof can be used. Aluminum and alloys thereof are inexpensive and can be easily formed into thin films, and are accordingly suitable as materials of the positive electrode current collector. The sheet or film may be porous or non-porous. As the sheet or film, a metal foil, a metal mesh, or the like is used. A carbon material, such as carbon, may be applied as a conductive auxiliary material to the surface of the positive electrode current collector.

### [Electrode Mixture Layer]

The electrode mixture layer 12 includes an electrode active material and a binder.

The thickness of the electrode mixture layer 12 is, for example, 50 µm or more and 150 µm or less.

When the electrode 10 is a negative electrode, the electrode mixture layer 12 is a negative electrode mixture layer, and the negative electrode mixture layer includes a negative electrode active material. The negative electrode active material can be a material capable of occluding and releasing metal ions (e.g., lithium ions). The negative electrode active material includes, for example, at least one selected from the group consisting of a carbon material and a material capable of forming an alloy with lithium. Examples of carbon materials include graphite. Further, from the viewpoint of, for example, increasing the capacity of a secondary battery, it is preferable to include a Si-based material. Here, the term "Si-based material" means a material containing Si. Examples of Si-based materials include Si, a Si alloy, and a Si compound. Further, the Si-based material may be, for example, a composite particle including an ion-conductive phase and a silicon phase (in one aspect, silicon particles) dispersed in the ion-conductive phase. The ion-conductive phase is a phase that conducts ions and includes, for example, at least one selected from the group consisting of a silicate phase, an aluminate phase, a carbon phase, and a silicon oxide phase. One selected from these negative electrode active materials may be used, or two or more thereof may be used in combination.

The negative electrode mixture layer may include, as the negative electrode active material, at least one selected from the group consisting of graphite and a Si-based material. Graphite is preferable because graphite is less susceptible to deterioration even after repeated charging and discharging at deep depths. A carbon material other than graphite may be used as the negative electrode active material. A Si-based material exhibits higher capacity than graphite and is accordingly advantageous for increasing battery capacity. To maintain favorable cycle characteristics and also achieve higher capacity, graphite and a Si-based material may be used in combination as the negative electrode active material.

When the Si-based material is the above composite particle and the ion-conductive phase is a carbon phase, the carbon phase may be composed of, for example, amorphous carbon (non-crystalline carbon). Examples of amorphous carbon constituting the carbon phase include hard carbon, soft carbon, and other types of amorphous carbon. Amorphous carbon is a carbon material in which an average interplanar spacing d002 of the (002) plane measured by X-ray diffraction is greater than 0.34 nm.

When the Si-based material is the above composite particle and the ion-conductive phase is a silicon oxide phase, a main component of the silicon oxide phase may be silicon dioxide. Here, the main component of the silicon oxide phase is, for example, a component accounting for 95 mass% or more and 100 mass% or less of the silicon oxide phase. The composition of the composite particle including the silicon oxide phase and the silicon phase dispersed therein can be represented by SiOₓ as a whole. SiOₓ has a structure in which, for example, fine particles of silicon are dispersed in amorphous SiO₂. For example, a ratio x of oxygen to silicon is preferably 0.5 ≤ x < 2.0, and more preferably 0.8 ≤ x ≤ 1.5.

When the Si-based material is the above composite particle and the ion-conductive phase is a silicate phase, the silicate phase may satisfy the following requirements (A) and/or (B).
(A) The silicate phase includes at least one selected from the group consisting of an alkali metal element and a Group 2 element (a Group 2 element in the long-form periodic table).
(B) The silicate phase includes an element L. The element L is at least one selected from the group consisting of B, Al, Zr, Nb, Ta, V, lanthanoids, Y, Ti, P, Bi, Zn, Sn, Pb, Sb, Co, Er, F, and W. "Lanthanoids" is a generic term for 15 elements from lanthanum (La), atomic number 57, to lutetium (Lu), atomic number 71.

For the above requirement (A), examples of alkali metal elements include lithium (Li), potassium (K), and sodium (Na). Examples of Group 2 elements include magnesium (Mg), calcium (Ca), strontium (Sr), and barium (Ba). By including an alkali metal element and/or a Group 2 element, the irreversible capacity of the silicate phase may be reduced. A silicate phase containing lithium (hereinafter also referred to as "lithium silicate phase") is preferable, for example, in terms of its low irreversible capacity and high initial charge-discharge efficiency.

The lithium silicate phase need only be an oxide phase containing Li, Si, and O, and may include other elements. The atomic ratio of O to Si, O/Si, in the lithium silicate phase is, for example, greater than 2 and less than 4. Preferably, O/Si is greater than 2 and less than 3. The atomic ratio of Li to Si, Li/Si, in the lithium silicate phase is, for example, greater than 0 and less than 4.

The lithium silicate phase may include a lithium silicate phase represented by the formula: Li_{2z}SiO_{(2+z)} (0 < z < 2), or may be composed of the lithium silicate phase. Preferably, z satisfies the relation 0 < z < 1, and more preferably, z = 1/2 (i.e., Li₂Si₂O₅).

Further, the Si-based material may include a composite particle including an ion-conductive phase and a silicon phase dispersed in the ion-conductive phase, and a coating layer coating at least a portion of the surface of the composite particle.

The coating layer present on the surface of the composite particle includes, for example, a conductive layer. By forming the conductive layer on the surface of the composite particle, the conductivity of the Si-based material can be enhanced. The conductive material constituting the conductive layer is preferably a conductive material containing carbon. Examples of conductive materials containing carbon include conductive carbon materials. Examples of conductive carbon materials include carbon black, graphite, and non-crystalline carbon (amorphous carbon) having low crystallinity. Non-crystalline carbon is preferable for its large buffering effect against the silicon phase that undergoes volume change during charging and discharging. The non-crystalline carbon may be graphitizable carbon (soft carbon) or non-graphitizable carbon (hard carbon). Examples of carbon black include acetylene black and Ketjenblack. The thickness of the conductive layer may be, for example, 1 nm or more and 200 nm or less. The thickness of the conductive layer can be measured by cross-sectional observation of the Si-containing material using SEM (scanning electron microscope) or TEM (transmission electron microscope).

From the viewpoint of, for example, increasing the capacity of a secondary battery, the content of the Si-based material relative to the total amount of the negative electrode active material is preferably 3 mass% or more, more preferably 5 mass% or more, and still more preferably 8 mass% or more. Further, from the viewpoints of, for example, increasing the capacity of a secondary battery or suppressing swelling of a negative electrode, the content of the Si-based material relative to the total amount of the negative electrode active material is preferably 3 mass% or more and 30 mass% or less, more preferably 5 mass% or more and 25 mass% or less, and still more preferably 8 mass% or more and 20 mass% or less.

When the electrode 10 is a negative electrode, the description of the binder in the negative electrode mixture layer is the same as the above description of the binder in the electrode mixture layer 12. That is, the negative electrode mixture layer contains the rubber-based binder and the water-soluble binder, and satisfies the above relational expressions (1), (2), and (3). The negative electrode mixture layer may further satisfy one or more of the above relational expressions (4) to (8).

When the electrode 10 is a negative electrode, the negative electrode mixture layer may satisfy the tortuosity requirement for the electrode mixture layer 12 described above. That is, the negative electrode mixture layer may satisfy the above relational expression (9), and may further satisfy the above relational expression (10) or (11).

The negative electrode mixture layer may further include other materials such as a conductive additive.

The conductive additive is used to reduce the resistance of the negative electrode. Examples of the conductive additive include a carbon material and a conductive polymer compound. Examples of carbon materials include carbon black, graphite, acetylene black, carbon nanotubes, carbon nanofibers, graphene, fullerenes, and graphite oxide. Examples of conductive polymer compounds include polyaniline, polypyrrole, and polythiophene.

When the electrode 10 is a positive electrode, the electrode mixture layer 12 is a positive electrode mixture layer, and the positive electrode mixture layer includes a positive electrode active material. The positive electrode active material can be a material capable of occluding and releasing metal ions (e.g., lithium ions). The positive electrode active material can be a lithium-containing transition metal oxide, a lithium-containing transition metal phosphate, a transition metal fluoride, a polyanion material, a fluorinated polyanion material, a transition metal sulfide, a transition metal oxysulfide, a transition metal oxynitride, or the like. In particular, when a lithium-containing transition metal oxide or a lithium-containing transition metal phosphate is used as the positive electrode active material, the battery manufacturing cost can be reduced and the average discharge voltage can be increased. Examples of lithium-containing transition metal oxides include lithium cobalt oxides, lithium nickel cobalt aluminum oxides, lithium nickel cobalt manganese oxides, and lithium nickel manganese oxides. Examples of lithium-containing transition metal phosphates include lithium iron phosphates, lithium vanadium phosphates, lithium cobalt phosphates, and lithium nickel phosphates.

When the electrode 10 is a positive electrode, the description of the binder in the positive electrode mixture layer is the same as the above description of the binder in the electrode mixture layer 12. That is, the positive electrode mixture layer contains the rubber-based binder and the water-soluble binder, and satisfies the above relational expressions (1), (2), and (3). The positive electrode mixture layer may further satisfy one or more of the above relational expressions (4) to (8).

When the electrode 10 is a positive electrode, the positive electrode mixture layer may satisfy the tortuosity requirement for the electrode mixture layer 12 described above. That is, the positive electrode mixture layer may satisfy the above relational expression (9), and may further satisfy the above relational expression (10) or (11).

The positive electrode mixture layer may further include other materials such as a conductive additive. The materials usable as the conductive additive in the negative electrode mixture layer can also be used in the positive electrode mixture layer.

### (Embodiment 2)

A battery according to Embodiment 2 includes a positive electrode, a negative electrode, and an electrolyte. At least one selected from the group consisting of the positive electrode and the negative electrode is the electrode according to Embodiment 1. With this configuration, the battery according to Embodiment 2 can reduce the internal resistance. The negative electrode may be the electrode according to Embodiment 1.

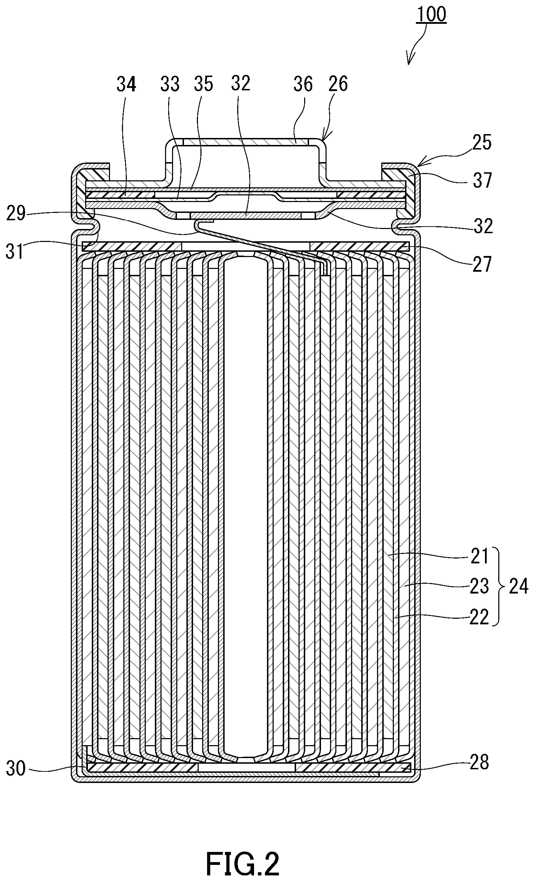

FIG. 2 is a longitudinal sectional view schematically showing an example of the battery according to Embodiment 2. A battery 100 is a cylindrical battery that includes a cylindrical battery case, a wound-type electrode group 24, and an electrolyte solution not shown. The electrode group 24 is housed in the battery case and is in contact with the electrolyte solution.

The battery case is composed of a case body 25 that is a bottomed cylindrical metal container and a sealing body 26 that seals the opening of the case body 25. A gasket 37 is disposed between the case body 25 and the sealing body 26. The gasket 37 ensures hermetic sealing of the battery case. Within the case body 25, insulating plates 27 and 28 are disposed at the respective opposite ends of the electrode group 24 in the direction of the winding axis of the electrode group 24.

The case body 25 has, for example, a step portion 31. The step portion 31 can be formed by partially pressing the side wall of the case body 25 from the outside. The step portion 31 may be formed in an annular shape on the side wall of the case body 25 along the circumferential direction of a virtual circle defined by the case body 25. In this case, the sealing body 26 is supported, for example, by the surface of the step portion 31 facing the opening.

The sealing body 26 includes a filter 32, a lower valve body 33, an insulating member 34, an upper valve body 35, and a cap 36. In the sealing body 26, these members are stacked in this order. The sealing body 26 is attached to the opening of the case body 25 such that the cap 36 is located outside the case body 25 and the filter 32 is located inside the case body 25.

The above members constituting the sealing body 26 are each, for example, diskshaped or ring-shaped. The above members are electrically connected to each other, except for the insulating member 34.

The electrode group 24 includes a positive electrode 21, a separator 22, and a negative electrode 23. The positive electrode 21, the separator 22, and the negative electrode 23 are all strip-shaped. The width directions of the strip-shaped positive electrode 21 and negative electrode 23 are, for example, parallel to the winding axis of the electrode group 24. The separator 22 is disposed between the positive electrode 21 and the negative electrode 23. The positive electrode 21 and the negative electrode 23 are spirally wound with the separator 22 interposed between these electrodes.

When a cross section of the battery 100 in a direction perpendicular to the winding axis of the electrode group 24 is observed, the positive electrode 21 and the negative electrode 23 are alternately stacked in the radial direction of the virtual circle defined by the case body 25 with the separator 22 interposed between these electrodes.

The positive electrode 21 is electrically connected, via a positive electrode lead 29, to the cap 36 that also serves as the positive electrode terminal. One end of the positive electrode lead 29 is, for example, connected to the vicinity of the center of the positive electrode 21 in the longitudinal direction of the positive electrode 21. The positive electrode lead 29 extends from the positive electrode 21 to the filter 32 through a through hole formed in the insulating plate 27. The other end of the positive electrode lead 29 is, for example, welded to the surface of the filter 32 facing the electrode group 24.

The negative electrode 23 is electrically connected, via a negative electrode lead 30, to the case body 25 that also serves as the negative electrode terminal. One end of the negative electrode lead 30 is, for example, connected to an end portion of the negative electrode 23 in the longitudinal direction of the negative electrode 23. The other end of the negative electrode lead 30 is, for example, welded to the inner bottom surface of the case body 25.

The components of the battery 100 are described in detail below.

The positive electrode 21 includes a material having properties of occluding and releasing metal ions (e.g., lithium ions). The positive electrode 21 includes, for example, a positive electrode active material. The positive electrode 21 may include a positive electrode current collector and a positive electrode mixture layer supported on the surface of the positive electrode current collector. The positive electrode current collector and the positive electrode mixture layer are as described in Embodiment 1. The positive electrode 21 may be the electrode 10 according to Embodiment 1.

The negative electrode 23 includes a material having properties of occluding and releasing metal ions (e.g., lithium ions). The negative electrode 23 includes, for example, a negative electrode active material. The negative electrode 23 may include a negative electrode current collector and a negative electrode mixture layer supported on the surface of the negative electrode current collector. The negative electrode current collector and the negative electrode mixture layer are as described in Embodiment 1. The negative electrode 23 may be the electrode 10 according to Embodiment 1.

The electrolyte solution may include a nonaqueous solvent and a lithium salt dissolved in the nonaqueous solvent. The concentration of the lithium salt in the electrolyte solution may be, for example, 0.5 mol/L or more and 2 mol/L or less. By controlling the lithium salt concentration within the above range, an electrolyte solution having excellent ionic conductivity and moderate viscosity can be obtained. However, the lithium salt concentration is not limited to the above range.

The nonaqueous solvent can be a cyclic carbonate, a chain carbonate, a cyclic ether, a chain ether, a nitrile, an amide, or the like. One selected from these solvents may be used, or two or more thereof may be used in combination.

The lithium salt can be lithium hexafluorophosphate (LiPF₆), lithium tetrafluoroborate (LiBF₄), lithium perchlorate (LiClO₄), lithium bis(fluorosulfonyl)imide (LiFSI), lithium bis(trifluoromethanesulfonyl)imide (LiTFSI), lithium bis(perfluoroethylsulfonyl)imide (LiN(SO₂C₂F₅)₂), LiAsF₆, LiCF₃SO₃, lithium difluoro(oxalato)borate, or the like. One selected from these electrolyte salts may be used, or two or more thereof may be used in combination.

It is usually desirable to interpose a separator between the positive electrode and the negative electrode. The separator 22 has high ion permeability as well as moderate mechanical strength and insulation properties. The separator 22 can be a microporous film, a woven fabric, a nonwoven fabric, or the like. The material of the separator 22 can be, for example, a polymer. The polymer may be, for example, a polyolefin, such as polypropylene or polyethylene.

In the battery according to Embodiment 2, a polymer provided as the separator may, for example, be impregnated with the electrolyte solution. That is, the battery according to Embodiment 2 may have a structure in which the electrolyte solution and the polymer are used in combination.

The battery according to Embodiment 2 may further include a solid electrolyte as an electrolyte. That is, the battery of the present disclosure may have a hybrid structure in which the electrolyte solution and the solid electrolyte are used in combination. Examples of the solid electrolyte material include a halide solid electrolyte, a sulfide solid electrolyte, an oxide solid electrolyte, and an organic polymer solid electrolyte. In the present disclosure, the term "halide solid electrolyte" means a solid electrolyte that contains a halogen element as the main component of the anions. The term "sulfide solid electrolyte" means a solid electrolyte that contains sulfur as the main component of the anions. The term "oxide solid electrolyte" means a solid electrolyte that contains oxygen as the main component of the anions. The term "main component of the anions" means the anion having the largest amount of substance among all the anions constituting the solid electrolyte.

As an example of the structure of the battery according to Embodiment 2, the configuration example shown in FIG. 2 is described. In this configuration example, a cylindrical nonaqueous electrolyte secondary battery includes a wound-type electrode group, in which a positive electrode and a negative electrode are wound with a separator interposed therebetween, and an electrolyte solution, both of which are housed in an outer casing. However, the battery according to the present disclosure is not limited to this configuration example. The battery according to Embodiment 2 may be in any form such as a prismatic type, a coin type, a button type, or a laminated type. Further, as the electrode group in the battery according to Embodiment 2, the wound-type electrode group may be replaced with any other type of electrode group such as an electrode group in which a positive electrode and a negative electrode are stacked with a separator interposed therebetween.

### (Other Embodiments)

### (Supplementary Description)

From the description of the above embodiments, the following techniques are disclosed.

### (Technique 1)

An electrode including:
an electrode current collector; and
an electrode mixture layer disposed on the electrode current collector, wherein
the electrode mixture layer includes an electrode active material and a binder,
the binder includes a rubber-based binder and a water-soluble binder, and
when four divided layers obtained by dividing the electrode mixture layer into four equal parts in a thickness direction are defined, in order from a surface side of the electrode mixture layer toward the electrode current collector, as a first divided layer, a second divided layer, a third divided layer, and a fourth divided layer;
relative to a total mass of the rubber-based binder in the electrode mixture layer, a mass percentage (%) of the rubber-based binder in the first divided layer is defined as A1, a mass percentage (%) of the rubber-based binder in the second divided layer is defined as B1, a mass percentage (%) of the rubber-based binder in the third divided layer is defined as C1, and a mass percentage (%) of the rubber-based binder in the fourth divided layer is defined as D1; and
relative to a total mass of the water-soluble binder in the electrode mixture layer, a mass percentage (%) of the water-soluble binder in the first divided layer is defined as A2, a mass percentage (%) of the water-soluble binder in the second divided layer is defined as B2, a mass percentage (%) of the water-soluble binder in the third divided layer is defined as C2, and a mass percentage (%) of the water-soluble binder in the fourth divided layer is defined as D2,
the electrode mixture layer satisfies the following relational expressions (1), (2), and (3): $A 1 + D 1 < B 1 + C 1$ (1); $A 2 + D 2 < B 2 + C 2$ (2); and $A 1 < A 2$ (3).

With this configuration, the electrode according to Technique 1 can reduce the internal resistance of a battery.

### (Technique 2)

The electrode according to Technique 1, wherein
the electrode mixture layer satisfies the following relational expressions (4) and (5): $A 1 < B 1$ (4); and $A 2 < B 2$ (5).

With this configuration, the electrode according to Technique 2 can further reduce the internal resistance of a battery.

### (Technique 3)

The electrode according to Technique 1 or 2, wherein
the electrode mixture layer satisfies the following relational expression (6): $B 2 + C 2 < B 1 + C 1$ (6).

With this configuration, the electrode according to Technique 3 can further reduce the internal resistance of a battery.

### (Technique 4)

The electrode according to any one of Techniques 1 to 3, wherein
the electrode mixture layer satisfies the following relational expression (7): $57 % < B 1 + C 1 < 65 %$ (7).

With this configuration, the electrode according to Technique 4 can further reduce the internal resistance of a battery.

### (Technique 5)

The electrode according to any one of Techniques 1 to 4, wherein
the electrode mixture layer satisfies the following relational expression (8): $55 % < B 2 + C 2 < 60 %$ (8).

With this configuration, the electrode according to Technique 5 can further reduce the internal resistance of a battery.

### (Technique 6)

The electrode according to any one of Techniques 1 to 5, wherein
when a tortuosity of the first divided layer in the thickness direction is defined as τA and a tortuosity of the fourth divided layer in the thickness direction is defined as τD, the electrode mixture layer satisfies the following relational expression (9): $τA < τD$ (9).

With this configuration, the electrode according to Technique 6 can achieve a battery having enhanced cycle characteristics during high-rate charging and discharging.

### (Technique 7)

The electrode according to Technique 6, wherein
the electrode mixture layer satisfies the following relational expression (10): $0.3 \leq τA / τD < 1$ (10).

With this configuration, the electrode according to Technique 7 can achieve a battery having further enhanced cycle characteristics during high-rate charging and discharging.

### (Technique 8)

The electrode according to Technique 7, wherein
the electrode mixture layer satisfies the following relational expression (11): $0.4 \leq τA / τD < 0.8$ (11).

With this configuration, the electrode according to Technique 8 can achieve a battery having further enhanced cycle characteristics during high-rate charging and discharging.

### (Technique 9)

The electrode according to any one of Techniques 1 to 8, wherein
the electrode is a negative electrode.

With this configuration, the electrode according to Technique 9 can more effectively reduce the internal resistance of a battery.

### (Technique 10)

A battery including:
a positive electrode;
a negative electrode; and
an electrolyte, wherein
at least one selected from the group consisting of the positive electrode and the negative electrode is the electrode according to any one of Techniques 1 to 8.

With this configuration, the battery according to Technique 10 can reduce the internal resistance.

### (Technique 11)

The battery according to Technique 10, wherein
the negative electrode is the electrode according to any one of Techniques 1 to 8.

With this configuration, the battery according to Technique 11 can more effectively reduce the internal resistance.

### EXAMPLES

The present disclosure is described in more detail below by way of examples. The following examples merely illustrate one aspect and do not limit the present disclosure.

### [Example 1]

### (Preparation of Negative Electrode Mixture Slurry)

As the negative electrode active material, three materials, a first active material, a second active material, and a third active material, were prepared. The first active material was graphite, and the graphite was artificial graphite. The second active material was graphite, and the graphite was natural graphite. The third active material was a Si-based material. The Si-based material used as the third active material was a composite material including a silicon oxide phase as an ion-conductive phase. As the rubber-based binder, styrene-butadiene rubber (SBR) was prepared. As the water-soluble binder, carboxymethylcellulose (CMC) was prepared.

In Example 1, two slurries, a first slurry and a second slurry, were prepared as the negative electrode mixture slurry.

In the first slurry, an active material mixture was used in which the first active material, the second active material, and the third active material were mixed at a mass ratio of first active material:second active material:third active material = 72:18:10. The first slurry was prepared by adding water as a dispersion medium to a negative electrode mixture in which the active material mixture, the rubber-based binder, and the water-soluble binder were mixed at a mass ratio of active material mixture:rubber-based binder:water-soluble binder = 100:1:2, and then stirring the resulting mixture using a mixer.

In the second slurry, an active material mixture was used in which the second active material and the third active material were mixed at a mass ratio of second active material:third active material = 90:10. The second slurry was prepared by adding water as a dispersion medium to a negative electrode mixture in which the active material mixture, the rubber-based binder, and the water-soluble binder were mixed at a mass ratio of active material mixture:rubber-based binder:water-soluble binder = 100:1:2, and then stirring the resulting mixture using a mixer.

### (Preparation of Negative Electrode)

Copper foil was used as the negative electrode current collector. The second slurry was applied to both surfaces of the negative electrode current collector, and the coating films were dried to form films each having a thickness of 100 µm. The first slurry was applied to the surfaces of the respective films thus formed, the coating films were dried to form films each having a thickness of 30 µm, and then the films were rolled to form negative electrode mixture layers. That is, the negative electrode mixture layer was formed from a film formed using the first slurry and a film formed using the second slurry. In the negative electrode mixture layer, a region substantially corresponding to the first divided layer was prepared using the first slurry, and regions substantially corresponding to the second divided layer, the third divided layer, and the fourth divided layer were prepared using the second slurry. In a part of the negative electrode, an exposed portion in which the surface of the negative electrode current collector was exposed was provided.

### (Preparation of Positive Electrode Active Material)

A composite hydroxide represented by [Ni_{0.90}Al_{0.05}Mn_{0.05}](OH)₂, obtained by coprecipitation, was calcined at 500°C for 8 hours to obtain a composite oxide (Ni_{0.90}Al_{0.05}Mn_{0.05}O₂). Next, LiOH and the composite oxide were mixed at a molar ratio of Li to the total amount of Ni, Al, and Mn of 1.03:1 to obtain a mixture. The mixture was calcined under a stream of oxygen with an oxygen concentration of 95% (at flow rates of 2 mL/min per 10 cm³ and 5 L/min per kilogram of the mixture) from room temperature to 650°C at a heating rate of 2.0°C/min, and then calcined from 650°C to 780°C at a heating rate of 0.5°C/min, to obtain a lithium-containing composite oxide.

### (Preparation of Positive Electrode)

The above positive electrode active material, acetylene black, and polyvinylidene fluoride were mixed at a mass ratio of 98:1:1 with N-methyl-2-pyrrolidone (NMP) as a dispersion medium to prepare a positive electrode mixture slurry. Next, the positive electrode mixture slurry was applied onto a positive electrode current collector formed of aluminum foil, the coating film was dried and compressed, and then the positive electrode current collector was cut to a predetermined electrode size to obtain a positive electrode with positive electrode mixture layers disposed on both surfaces of the positive electrode core. In a part of the positive electrode, an exposed portion in which the surface of the positive electrode current collector was exposed was provided.

### (Preparation of Nonaqueous Electrolyte (Electrolyte Solution))

A nonaqueous electrolyte (electrolyte solution) was prepared by dissolving LiPF₆ at a concentration of 1.2 mol/L in a solvent mixture of ethylene carbonate (EC), ethyl methyl carbonate (EMC), and dimethyl carbonate (DMC) mixed at a volume ratio (at 25°C) of 3:3:4.

### (Fabrication of Test Cell (Secondary Battery))

An aluminum lead was attached to the exposed portion of the above positive electrode, and a nickel lead was attached to the exposed portion of the above negative electrode. The positive electrode and the negative electrode were spirally wound with a polyolefin separator interposed therebetween to produce a wound-type electrode assembly. An insulating plate was disposed on each of the upper and lower sides of the above electrode assembly, and the electrode assembly was housed in an outer can. The negative electrode lead was welded to the bottom of the bottomed cylindrical outer can, and the positive electrode lead was welded to a sealing body. The electrolyte solution was injected into the outer can, and the opening of the outer can was sealed with the sealing body via a gasket to fabricate a secondary battery serving as a test cell.

### [Example 2]

### (Preparation of Negative Electrode Mixture Slurry)

As the negative electrode active material, the same first active material, second active material, and third active material as in Example 1 were used. Further, as the rubber-based binder and the water-soluble binder, the same materials as in Example 1 were used.

In Example 2, two slurries, a first slurry and a second slurry, were prepared as the negative electrode mixture slurry.

In the first slurry, an active material mixture was used in which the first active material and the third active material were mixed at a mass ratio of first active material:third active material = 90:10. The first slurry was prepared by adding water as a dispersion medium to a negative electrode mixture in which the active material mixture, the rubber-based binder, and the water-soluble binder were mixed at a mass ratio of active material mixture:rubber-based binder:water-soluble binder = 100:1:2, and then stirring the resulting mixture using a mixer.

In the second slurry, the second active material and the third active material were used as the negative electrode active material. An active material mixture was used in which the second active material and the third active material were mixed at a mass ratio of second active material:third active material = 90:10. The second slurry was prepared by adding water as a dispersion medium to a negative electrode mixture in which the active material mixture, the rubber-based binder, and the water-soluble binder were mixed at a mass ratio of active material mixture:rubber-based binder:water-soluble binder = 100:1:2, and then stirring the resulting mixture using a mixer.

### (Preparation of Negative Electrode)

Copper foil was used as the negative electrode current collector. The second slurry was applied to both surfaces of the negative electrode current collector, and the coating films were dried to form films each having a thickness of 100 µm. The first slurry was applied to the surfaces of the respective films thus formed, the coating films were dried to form films each having a thickness of 30 µm, and then the films were rolled to form negative electrode mixture layers. That is, the negative electrode mixture layer was formed from a film formed using the first slurry and a film formed using the second slurry. In the negative electrode mixture layer, a region substantially corresponding to the first divided layer was prepared using the first slurry, and regions substantially corresponding to the second divided layer, the third divided layer, and the fourth divided layer were prepared using the second slurry.

### (Preparation of Positive Electrode Active Material and Positive Electrode)

The positive electrode active material and the positive electrode were prepared in the same manner as in Example 1.

### (Preparation of Nonaqueous Electrolyte (Electrolyte Solution))

The nonaqueous electrolyte solution was prepared in the same manner as in Example 1.

### (Fabrication of Test Cell (Secondary Battery))

A secondary battery serving as a test cell was fabricated in the same manner as in Example 1, except that the negative electrode prepared in Example 2 was used.

### [Example 3]

### (Preparation of Negative Electrode Mixture Slurry)

As the negative electrode active material, the same first active material, second active material, and third active material as in Example 1 were used. Further, as the rubber-based binder and the water-soluble binder, the same materials as in Example 1 were used.

In Example 3, two slurries, a first slurry and a second slurry, were prepared as the negative electrode mixture slurry.

In the first slurry, an active material mixture was used in which the first active material, the second active material, and the third active material were mixed at a mass ratio of first active material:second active material:third active material = 72:18:10. The first slurry was prepared by adding water as a dispersion medium to a negative electrode mixture in which the active material mixture, the rubber-based binder, and the water-soluble binder were mixed at a mass ratio of active material mixture:rubber-based binder:water-soluble binder = 100:1:1.5, and then stirring the resulting mixture using a mixer.

In the second slurry, the second active material and the third active material were used as the negative electrode active material. An active material mixture was used in which the second active material and the third active material were mixed at a mass ratio of second active material:third active material = 90:10. The second slurry was prepared by adding water as a dispersion medium to a negative electrode mixture in which the active material mixture, the rubber-based binder, and the water-soluble binder were mixed at a mass ratio of active material mixture:rubber-based binder:water-soluble binder = 100:1:2, and then stirring the resulting mixture using a mixer.

### (Preparation of Negative Electrode)

Copper foil was used as the negative electrode current collector. The second slurry was applied to both surfaces of the negative electrode current collector, and the coating films were dried to form films each having a thickness of 100 µm. The first slurry was applied to the surfaces of the respective films thus formed, the coating films were dried to form films each having a thickness of 30 µm, and then the films were rolled to form negative electrode mixture layers. That is, the negative electrode mixture layer was formed from a film formed using the first slurry and a film formed using the second slurry. In the negative electrode mixture layer, a region substantially corresponding to the first divided layer was prepared using the first slurry, and regions substantially corresponding to the second divided layer, the third divided layer, and the fourth divided layer were prepared using the second slurry.

### (Preparation of Positive Electrode Active Material and Positive Electrode)

The positive electrode active material and the positive electrode were prepared in the same manner as in Example 1.

### (Preparation of Nonaqueous Electrolyte (Electrolyte Solution))

The nonaqueous electrolyte solution was prepared in the same manner as in Example 1.

### (Fabrication of Test Cell (Secondary Battery))

A secondary battery serving as a test cell was fabricated in the same manner as in Example 1, except that the negative electrode prepared in Example 3 was used.

### [Example 4]

### (Preparation of Negative Electrode Mixture Slurry)

As the negative electrode active material, the same first active material, second active material, and third active material as in Example 1 were used. Further, as the rubber-based binder and the water-soluble binder, the same materials as in Example 1 were used.

In Example 4, two slurries, a first slurry and a second slurry, were prepared as the negative electrode mixture slurry.

In the first slurry, an active material mixture was used in which the first active material, the second active material, and the third active material were mixed at a mass ratio of first active material:second active material:third active material = 90:0:10. The first slurry was prepared by adding water as a dispersion medium to a negative electrode mixture in which the active material mixture, the rubber-based binder, and the water-soluble binder were mixed at a mass ratio of active material mixture:rubber-based binder:water-soluble binder = 100:1:1.5, and then stirring the resulting mixture using a mixer.

In the second slurry, the second active material and the third active material were used as the negative electrode active material. An active material mixture was used in which the second active material and the third active material were mixed at a mass ratio of second active material:third active material = 90:10. The second slurry was prepared by adding water as a dispersion medium to a negative electrode mixture in which the active material mixture, the rubber-based binder, and the water-soluble binder were mixed at a mass ratio of active material mixture:rubber-based binder:water-soluble binder = 100:1:2, and then stirring the resulting mixture using a mixer.

### (Preparation of Negative Electrode)

Copper foil was used as the negative electrode current collector. The second slurry was applied to both surfaces of the negative electrode current collector, and the coating films were dried to form films each having a thickness of 100 µm. The first slurry was applied to the surfaces of the respective films thus formed, the coating films were dried to form films each having a thickness of 30 µm, and then the films were rolled to form negative electrode mixture layers. That is, the negative electrode mixture layer was formed from a film formed using the first slurry and a film formed using the second slurry. In the negative electrode mixture layer, a region substantially corresponding to the first divided layer was prepared using the first slurry, and regions substantially corresponding to the second divided layer, the third divided layer, and the fourth divided layer were prepared using the second slurry.

### (Preparation of Positive Electrode Active Material and Positive Electrode)

The positive electrode active material and the positive electrode were prepared in the same manner as in Example 1.

### (Preparation of Nonaqueous Electrolyte (Electrolyte Solution))

The nonaqueous electrolyte solution was prepared in the same manner as in Example 1.

### (Fabrication of Test Cell (Secondary Battery))

A secondary battery serving as a test cell was fabricated in the same manner as in Example 1, except that the negative electrode prepared in Example 4 was used.

### [Comparative Example 1]

### (Preparation of Negative Electrode Mixture Slurry)

As the negative electrode active material, the same first active material, second active material, and third active material as in Example 1 were used. Further, as the rubber-based binder and the water-soluble binder, the same materials as in Example 1 were used.

In the first slurry, an active material mixture was used in which the first active material, the second active material, and the third active material were mixed at a mass ratio of first active material:second active material:third active material = 54:36:10. The first slurry was prepared by adding water as a dispersion medium to a negative electrode mixture in which the active material mixture, the rubber-based binder, and the water-soluble binder were mixed at a mass ratio of active material mixture:rubber-based binder:water-soluble binder = 100:1:2, and then stirring the resulting mixture using a mixer.

In the second slurry, an active material mixture was used in which the first active material, the second active material, and the third active material were mixed at a mass ratio of first active material:second active material:third active material = 45:45:10. The second slurry was prepared by adding water as a dispersion medium to a negative electrode mixture in which the active material mixture, the rubber-based binder, and the water-soluble binder were mixed at a mass ratio of active material mixture:rubber-based binder:water-soluble binder = 100:1:2, and then stirring the resulting mixture using a mixer.

### (Preparation of Negative Electrode)

Copper foil was used as the negative electrode current collector. The second slurry was applied to both surfaces of the negative electrode current collector, and the coating films were dried to form films each having a thickness of 65 µm. The first slurry was applied to the surfaces of the respective films, the coating films were dried to form films each having a thickness of 65 µm, and then the films were rolled to form negative electrode mixture layers. That is, the negative electrode mixture layer was formed from a film formed using the first slurry and a film formed using the second slurry. In the negative electrode mixture layer, regions substantially corresponding to the first divided layer and the second divided layer were prepared using the first slurry, and regions substantially corresponding to the third divided layer and the fourth divided layer were prepared using the second slurry.

### (Preparation of Positive Electrode Active Material and Positive Electrode)

The positive electrode active material and the positive electrode were prepared in the same manner as in Example 1.

### (Preparation of Nonaqueous Electrolyte (Electrolyte Solution))

The nonaqueous electrolyte solution was prepared in the same manner as in Example 1.

### (Fabrication of Test Cell (Secondary Battery))

A secondary battery serving as a test cell was fabricated in the same manner as in Example 1, except that the negative electrode prepared in Comparative Example 1 was used.

### [Comparative Example 2]

### (Preparation of Negative Electrode Mixture Slurry)

As the negative electrode active material, the same first active material, second active material, and third active material as in Example 1 were used. Further, as the rubber-based binder and the water-soluble binder, the same materials as in Example 1 were used.

In Comparative Example 2, two slurries, a first slurry and a second slurry, were prepared as the negative electrode mixture slurry.

In the first slurry, an active material mixture was used in which the first active material and the third active material were mixed at a mass ratio of first active material:third active material = 90:10. The first slurry was prepared by adding water as a dispersion medium to a negative electrode mixture in which the active material mixture, the rubber-based binder, and the water-soluble binder were mixed at a mass ratio of active material mixture:rubber-based binder:water-soluble binder = 100:2:2, and then stirring the resulting mixture using a mixer.

In the second slurry, the second active material and the third active material were used as the negative electrode active material. An active material mixture was used in which the second active material and the third active material were mixed at a mass ratio of second active material:third active material = 90:10. The second slurry was prepared by adding water as a dispersion medium to a negative electrode mixture in which the active material mixture, the rubber-based binder, and the water-soluble binder were mixed at a mass ratio of active material mixture:rubber-based binder:water-soluble binder = 100:1:2, and then stirring the resulting mixture using a mixer.

### (Preparation of Negative Electrode)

Copper foil was used as the negative electrode current collector. The second slurry was applied to both surfaces of the negative electrode current collector, and the coating films were dried to form films each having a thickness of 100 µm. The first slurry was applied to the surfaces of the respective films thus formed, the coating films were dried to form films each having a thickness of 30 µm, and then the films were rolled to form negative electrode mixture layers. That is, the negative electrode mixture layer was formed from a film formed using the first slurry and a film formed using the second slurry. In the negative electrode mixture layer, a region substantially corresponding to the first divided layer was prepared using the first slurry, and regions substantially corresponding to the second divided layer, the third divided layer, and the fourth divided layer were prepared using the second slurry.

### (Preparation of Positive Electrode Active Material and Positive Electrode)

The positive electrode active material and the positive electrode were prepared in the same manner as in Example 1.

### (Preparation of Nonaqueous Electrolyte (Electrolyte Solution))

The nonaqueous electrolyte solution was prepared in the same manner as in Example 1.

### (Fabrication of Test Cell (Secondary Battery))

A secondary battery serving as a test cell was fabricated in the same manner as in Example 1, except that the negative electrode prepared in Comparative Example 2 was used.

### [Comparative Example 3]

### (Preparation of Negative Electrode Mixture Slurry)

As the negative electrode active material, the same first active material, second active material, and third active material as in Example 1 were used. Further, as the rubber-based binder and the water-soluble binder, the same materials as in Example 1 were used.

In Comparative Example 3, an active material mixture was used in which the first active material, the second active material, and the third active material were mixed at a mass ratio of first active material:second active material:third active material = 45:45:10. A negative electrode slurry was prepared by adding water as a dispersion medium to this negative electrode mixture in which the active material mixture, the rubber-based binder, and the water-soluble binder were mixed at a mass ratio of active material mixture:rubber-based binder:water-soluble binder = 100:1:2, and then stirring the resulting mixture using a mixer.

### (Preparation of Negative Electrode)

Copper foil was used as the negative electrode current collector. The negative electrode slurry was applied to both surfaces of the negative electrode current collector, and the coating films were dried to form films each having a thickness of 130 µm. Thereafter, the coating films were rolled to form negative electrode mixture layers.

### (Preparation of Positive Electrode Active Material and Positive Electrode)

The positive electrode active material and the positive electrode were prepared in the same manner as in Example 1.

### (Preparation of Nonaqueous Electrolyte (Electrolyte Solution))

The nonaqueous electrolyte solution was prepared in the same manner as in Example 1.

### (Fabrication of Test Cell (Secondary Battery))

A secondary battery serving as a test cell was fabricated in the same manner as in Example 1, except that the negative electrode prepared in Comparative Example 3 was used.

### [Comparative Example 4]

### (Preparation of Negative Electrode Mixture Slurry)

As the negative electrode active material, the same first active material, second active material, and third active material as in Example 1 were used. Further, as the rubber-based binder and the water-soluble binder, the same materials as in Example 1 were used.

In Comparative Example 4, two slurries, a first slurry and a second slurry, were prepared as the negative electrode mixture slurry.

In the first slurry, an active material mixture was used in which the first active material and the third active material were mixed at a mass ratio of first active material:third active material = 90:10. The first slurry was prepared by adding water as a dispersion medium to a negative electrode mixture in which the active material mixture, the rubber-based binder, and the water-soluble binder were mixed at a mass ratio of active material mixture:rubber-based binder:water-soluble binder = 100:0.5:1, and then stirring the resulting mixture using a mixer.

In the second slurry, the second active material and the third active material were used as the negative electrode active material. An active material mixture was used in which the second active material and the third active material were mixed at a mass ratio of second active material:third active material = 90:10. The second slurry was prepared by adding water as a dispersion medium to a negative electrode mixture in which the active material mixture, the rubber-based binder, and the water-soluble binder were mixed at a mass ratio of active material mixture:rubber-based binder:water-soluble binder = 100:1:2, and then stirring the resulting mixture using a mixer.

### (Preparation of Negative Electrode)

Copper foil was used as the negative electrode current collector. The second slurry was applied to both surfaces of the negative electrode current collector, and the coating films were dried to form films each having a thickness of 100 µm. The first slurry was applied to the surfaces of the respective films thus formed, the coating films were dried to form films each having a thickness of 30 µm, and then the films were rolled to form negative electrode mixture layers. That is, the negative electrode mixture layer was formed from a film formed using the first slurry and a film formed using the second slurry. In the negative electrode mixture layer, a region substantially corresponding to the first divided layer was prepared using the first slurry, and regions substantially corresponding to the second divided layer, the third divided layer, and the fourth divided layer were prepared using the second slurry.

### (Preparation of Positive Electrode Active Material and Positive Electrode)

The positive electrode active material and the positive electrode were prepared in the same manner as in Example 1.

### (Preparation of Nonaqueous Electrolyte (Electrolyte Solution))

The nonaqueous electrolyte solution was prepared in the same manner as in Example 1.

### (Fabrication of Test Cell (Secondary Battery))

A secondary battery serving as a test cell was fabricated in the same manner as in Example 1, except that the negative electrode prepared in Comparative Example 4 was used.

### [Measurement of Mass Percentage of Rubber-Based Binder in Negative Electrode Mixture Layer]

For the negative electrodes of the examples and comparative examples, the mass percentages A1, B1, C1, and D1 of the rubber-based binder in the negative electrode mixture layer were measured by elemental mapping using the following method. The results are shown in Table 1.

Quantitative analysis of the rubber-based binder by elemental mapping was performed using EPMA. The rubber-based binder used in the examples and comparative examples was SBR, that is, a rubber-based polymer compound having a C=C bond. Bromine was added to the C=C bond in SBR, and bromine was analyzed by EPMA elemental mapping of a cross section of the negative electrode mixture layer. Thus, the content of the rubber-based binder in each of the divided layers was determined. The method used for adding bromine to the rubber-based polymer compound was a method of immersing the negative electrode in a bromine solution. The EPMA conditions in the examples and comparative examples were as follows.
Electron beam diameter: 1 µm
Accelerating voltage: 15 kV
Beam current: 50 nA
Number of pixels: 255 × 255 pixels
Measurement time: 30 msec/pixel

### [Measurement of Mass Percentage of Water-Soluble Binder in Negative Electrode Mixture Layer]

For the negative electrodes of the examples and comparative examples, the mass percentages A2, B2, C2, and D2 of the water-soluble binder in the negative electrode mixture layer were measured by elemental mapping using the following method. The results are shown in Table 1.

Quantitative analysis of the water-soluble binder by elemental mapping was performed using EPMA. The water-soluble binder used in the examples and comparative examples was CMC, that is, a water-soluble polymer compound having a carboxyl group. Ruthenium was added to the carboxyl group, and ruthenium bromine was analyzed by EPMA elemental mapping of a cross section of the negative electrode mixture layer. Thus, the content of the water-soluble binder in each of the divided layers was determined. The method used for adding ruthenium to the water-soluble polymer compound was a method of immersing the negative electrode in a ruthenium-containing solution. The EPMA conditions were as follows.
Electron beam diameter: 1 µm
Accelerating voltage: 15 kV
Beam current: 50 nA
Number of pixels: 255 × 255 pixels
Measurement time: 30 msec/pixel

### [Measurement of Tortuosity of Negative Electrode Mixture Layer]

For the negative electrodes of the examples and comparative examples, the tortuosity τA of the first divided layer and the tortuosity τD of the fourth divided layer were determined by the method described in Embodiment 1. The tortuosity ratio τA/τD was calculated from the values of the tortuosity τA and the tortuosity τD. The results are shown in Table 1.

### [Measurement of DCR]

The DCR of the test cells of the examples and comparative examples was measured by the following method.

Initial charge and discharge were performed on the test cells of the examples and comparative examples under the following conditions.

### (Charge-Discharge Conditions)

### • Initial Charge-Discharge Conditions

A constant-current charge was performed at a current of 0.5 It (625 mA) until the battery voltage reached 4.2 V. Further, a constant-voltage charge was performed at a voltage of 4.2 V until the current value reached 0.02 It (25 mA). Then, a constant-current discharge was performed at a current of 0.5 It (625 mA) until the battery voltage reached 2.5 V.

Next, charge and discharge were performed under the following conditions, and the value of the initial direct current internal resistance (DCR) was determined by the following equation (a). The results are shown in Table 1.

### (Charge-Discharge Conditions)

Under a temperature condition of 25°C, a constant-current charge was performed at a current of 0.3 It (375 mA) until the battery voltage reached 3.79 V. Further, a constant-voltage charge was performed at a constant voltage of 3.79 V until the current value reached 0.02 It (25 mA). Then, after a rest period of 2 hours, a discharge was performed at a current of 0.2 It (250 mA) for 10 seconds.
(Equation for Calculating DCR) 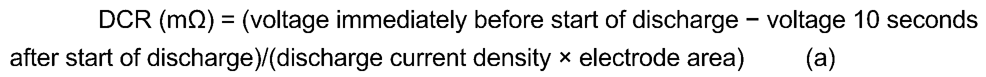 DCR (mΩ) = (voltage immediately before start of discharge - voltage 10 seconds after start of discharge)/(discharge current density × electrode area) (a)

The results are shown in Table 1. Table 1 shows relative values based on the DCR value of Comparative Example 1 taken as a reference (100%).

**[Table 1]**

| | Negative electrode mixture layer | | | | | | | | | | | | | DCR (relative value) |
|---|---|---|---|---|---|---|---|---|---|---|---|---|---|---|
| | Mass percentage of rubber-based binder (%) | | | | | | Mass percentage of water-soluble binder (%) | | | | | | Tortuosity ratio τA/τD | |
| | A1 | B1 | C1 | D1 | A1+D1 | B1+C1 | A2 | B2 | C2 | D2 | A2+D2 | B2+C2 | | |
| Example 1 | 17 | 30 | 32 | 21 | 38 | 62 | 20 | 29 | 27 | 24 | 44 | 56 | 0.6 | 95% |
| Example 2 | 18 | 33 | 30 | 19 | 37 | 63 | 20 | 32 | 26 | 22 | 42 | 58 | 0.4 | 95% |
| Example 3 | 17 | 29 | 31 | 23 | 40 | 60 | 20 | 28 | 29 | 23 | 43 | 57 | 0.6 | 93% |
| Example 4 | 19 | 30 | 29 | 22 | 41 | 59 | 23 | 32 | 25 | 20 | 43 | 57 | 0.4 | 92% |
| Comparative Example 1 | 29 | 19 | 26 | 26 | 55 | 45 | 31 | 24 | 25 | 20 | 51 | 49 | 0.9 | 100% |
| Comparative Example 2 | 25 | 29 | 25 | 21 | 46 | 54 | 22 | 30 | 26 | 22 | 44 | 56 | 0.4 | 105% |
| Comparative Example 3 | 35 | 26 | 22 | 17 | 52 | 48 | 32 | 26 | 22 | 20 | 52 | 48 | 1.0 | 110% |
| Comparative Example 4 | 16 | 36 | 32 | 16 | 32 | 68 | 14 | 35 | 30 | 21 | 35 | 65 | 0.4 | 105% |

### (Discussion)

As shown in Table 1, the batteries of Examples 1 to 4, in each of which a negative electrode including a negative electrode mixture layer that satisfies the above relational expressions (1), (2), and (3) was used, exhibited lower DCR than the batteries of Comparative Examples 1 to 4, in each of which an electrode including an electrode mixture layer that satisfies the above relational expressions (1), (2), and (3) was not used. That is, the electrodes including electrode mixture layers that satisfy the above relational expressions (1), (2), and (3) reduced the internal resistance of the batteries.

### INDUSTRIAL APPLICABILITY

The technique of the present disclosure is useful for batteries such as lithium-ion secondary batteries.

## Claims

1. An electrode comprising:
an electrode current collector; and
an electrode mixture layer disposed on the electrode current collector, wherein
the electrode mixture layer comprises an electrode active material and a binder,
the binder comprises a rubber-based binder and a water-soluble binder, and
when four divided layers obtained by dividing the electrode mixture layer into four equal parts in a thickness direction are defined, in order from a surface side of the electrode mixture layer toward the electrode current collector, as a first divided layer, a second divided layer, a third divided layer, and a fourth divided layer;
relative to a total mass of the rubber-based binder in the electrode mixture layer, a mass percentage (%) of the rubber-based binder in the first divided layer is defined as A1, a mass percentage (%) of the rubber-based binder in the second divided layer is defined as B1, a mass percentage (%) of the rubber-based binder in the third divided layer is defined as C1, and a mass percentage (%) of the rubber-based binder in the fourth divided layer is defined as D1; and
relative to a total mass of the water-soluble binder in the electrode mixture layer, a mass percentage (%) of the water-soluble binder in the first divided layer is defined as A2, a mass percentage (%) of the water-soluble binder in the second divided layer is defined as B2, a mass percentage (%) of the water-soluble binder in the third divided layer is defined as C2, and a mass percentage (%) of the water-soluble binder in the fourth divided layer is defined as D2,
the electrode mixture layer satisfies the following relational expressions (1), (2), and (3): $A 1 + D 1 < B 1 + C 1$ (1); $A 2 + D 2 < B 2 + C 2$ (2); and $A 1 < A 2$ (3).

2. The electrode according to claim 1, wherein
the electrode mixture layer satisfies the following relational expressions (4) and (5): $A 1 < B 1$ (4); and $A 2 < B 2$ (5).

3. The electrode according to claim 1, wherein
the electrode mixture layer satisfies the following relational expression (6): $B 2 + C 2 < B 1 + C 1$ (6).

4. The electrode according to claim 1, wherein
the electrode mixture layer satisfies the following relational expression (7): $57 % < B 1 + C 1 < 65 %$ (7).

5. The electrode according to claim 1, wherein
the electrode mixture layer satisfies the following relational expression (8): $55 % < B 2 + C 2 < 60 %$ (8).

6. The electrode according to claim 1, wherein
when a tortuosity of the first divided layer in the thickness direction is defined as τA and a tortuosity of the fourth divided layer in the thickness direction is defined as τD, the electrode mixture layer satisfies the following relational expression (9): $τA < τD$ (9).

7. The electrode according to claim 6, wherein
the electrode mixture layer satisfies the following relational expression (10): $0.3 \leq τA / τD < 1$ (10).

8. The electrode according to claim 7, wherein
the electrode mixture layer satisfies the following relational expression (11): $0.4 \leq τA / τD < 0.8$ (11).

9. The electrode according to claim 1, wherein
the electrode is a negative electrode.

10. A battery comprising:
a positive electrode;
a negative electrode; and
an electrolyte, wherein
at least one selected from the group consisting of the positive electrode and the negative electrode is the electrode according to any one of claims 1 to 8.

11. The battery according to claim 10, wherein
the negative electrode is the electrode according to any one of claims 1 to 8.
